# EUROPÄISCHE PATENTSCHRIFT

(11) **EP 2 786 863 B1**
(45) Veröffentlichungstag und Bekanntmachung des Hinweises auf die Patenterteilung: **05.08.2020**
(21) Anmeldenummer: 14075018.3
(22) Anmeldetag: 18.03.2014
(51) Int. Cl.: F16L 59/06, F16L 59/14, F16L 59/04, B32B 5/18, B32B 5/20, B32B 15/04, B32B 27/06, B32B 15/18, B32B 27/30, F16L 9/147, F28F 19/04, B32B 27/36, B32B 1/08

(54) **Kunststoffummanteltes Rohr aus Stahl**
Plastic sheathed steel tube
Tube en acier avec gaine en matière synthétique

(30) Priorität: 04.04.2013 DE 102013006206
(43) Veröffentlichungstag der Anmeldung: 08.10.2014
(73) Patentinhaber: Mannesmann Line Pipe GmbH, 57074 Siegen (DE)
(72) Erfinder: Winkels, Jörn, 59457 Werl (DE); Kocks, Hans-Jürgen, 57258 Freudenberg (DE)
(74) Vertreter: Meissner, Peter E.

(56) Entgegenhaltungen:
- EP-A1- 1 260 547
- DE-A1- 2 636 973
- DE-A1- 10 238 520
- DE-A1-102012 016 916
- JP-A- 2006 348 976
- US-A1- 2002 182 357

## Beschreibung

Die Erfindung betrifft ein kunststoffummanteltes Rohr aus Stahl, welches als einzelnes Rohr Anwendung findet oder als Rohrleitung zum Transport von flüssigen oder gasförmigen Medien dient, gemäß dem Oberbegriff des Patentanspruches 1.

Einzelne Rohre werden z.B. für Straßenlampen, Werbetürme oder Verkehrsleitsysteme verwendet und auch als Träger von solaraktiven Elementen.

Bei der Verwendung von einzelnen Rohren als Träger von solaraktiven Elementen, werden gemäß einer noch unveröffentlichten Anmeldung des Anmelders in einem ersten Schritt die solaraktiven Elemente auf der Rohroberfläche fixiert und in einem zweiten Schritt werden das Rohr und die darauf befestigten solaraktiven Elemente mit einer lichtdurchlässigen das Rohr und die Solarmodule fest umschließenden und wasserundurchlässigen Ummantelung aus Kunststoff versehen.

Rohrleitungen aus einzelnen zusammengesetzten Rohren für zu transportierende Medien wie z.B. Wasser, Öl, Erdgas oder andere Medien können unterirdisch, oberirdisch oder in Wasser verlegt sein.

Typische Rohrdurchmesser für die beschriebenen Anwendungsfälle liegen bei etwa 100 mm bis 1600 mm, mit Wanddicken von etwa 3 mm bis 20 mm.

Rohre oder Rohrleitungen können je nach Einsatz durch Erdreich, Atmosphäre und Wasser korrosiv oder mechanisch beansprucht werden. Bei ummantelten Rohren bzw. Rohrleitungen kann dies zu einer Beschädigung der Beschichtung und zu Unterrostungen führen. Beschädigungen der Ummantelung können bereits schon beim Transport der Rohre oder bei der Verlegung der Rohrleitung auftreten und zum späteren Durchkorrodieren des Stahlrohres und damit zur Undichtigkeit der Rohrleitung führen.

Die Effektivität des Schutzes einer Ummantelung ist abhängig von deren Qualität, d.h. von der Fehlerfreiheit der Beschichtung. Fehler oder Beschädigungen an der Beschichtung, die einen elektrischen Kontakt des Rohres mit Erdreich oder Wasser verursachen, ermöglichen einen Korrosionsangriff auf das Stahlrohr, der sich in großflächigen Delaminationen der Beschichtung auswirkt und letztendlich zum Ausfall des Rohres oder der Rohrleitung führen kann.

Bei freiverlegten der Witterung ausgesetzten Rohren und bei erdverlegten oder unter Wasser verlegten Rohrleitungen hat sich eine Ummantelung aus Kunststoff als Korrosionsschutz bewährt. Bevorzugt werden dafür Epoxidharz, Polyethylen, Polypropylen, Polyurethan und Polyamid verwendet. Beispielsweise ist aus der DE 32 475 12 C1 ein so beschichtetes Rohr bekannt.

Für besondere Anwendungsfälle, wie z.B. bei den zuvor erwähnten Rohren mit solaraktiven Elementen, werden aber auch Ummantelungen aus Polymethylmethacrylat (PMMA) eingesetzt, die eine zwar sehr harte und kratzfeste Oberfläche aufweisen, aber als Rohrummantelung bei E-Modulen (Zug-) von ca. 2700-3200 N/mm² z.B. bei Temperaturschwankungen sehr spannungsrissanfällig sind. Diese Kunststoffe sind auch unter den Namen Acrylglas oder Plexiglas® bekannt.

Für Sonderfälle werden außerdem Kunststoffummantelungen aus Polycarbonat (PC) oder Polystyrol (PS) eingesetzt, die gekennzeichnet sind durch eine hohe Härte, hohem E-Modul und Spannungsrissempfindlichkeit.

Untersuchungen haben ergeben, dass für die Rissempfindlichkeit das im Vergleich zu Stahl stark eingeschränkte Wärmedehnungsvermögen dieser Kunststoffe ursächlich ist.

Bei Kunststoffen mit hoher Spnnungsrissempfindlichkeit kann es durch das stark unterschiedliche Dehnvermögen von Stahlrohr und Kunststoffummantelung zu hohen Umfangsspannungen in der Beschichtung kommen, die sich in der Folge durch das eingeschränkte Dehnvermögen der Beschichtung durch Rissbildung wieder abbauen. Verstärkt wird das Problem zusätzlich, wenn die Ummantelung haftend mit dem Stahlrohr verbunden ist.

Um Rohrummantelungen mit spannungsrissempfindlichen Kunststoffen zu realisieren, die den Umgebungsbedingungen mit Temperaturwechseln in Extremfällen von -20°C bis +60°C standhalten, sind Vorkehrungen für eine Reduktion der Umfangsspannungen unumgänglich.

Der Einsatz von spannungsrissempfindlichen Kunststoffen wie z.B. PMMA, PC oder PS als Ummantelung von Rohren aus Stahl ist dadurch gehemmt, dass die Rissempfindlichkeit bei Temperaturschwankungen bislang nicht beseitigt werden konnte.

Aufgabe der Erfindung ist es daher, ein mit Kunststoff ummanteltes Rohr aus Stahl anzugeben, bei dem die Ummantelung aus Kunststoff mit hoher Spannungsrissempfindlichkeit besteht, welches auch bei Temperaturschwankungen von -20°C bis +60°C unter Einsatzbedingungen eine hohe Unempfindlichkeit gegen Rissbildung aufweist.

Diese Aufgabe wird ausgehend vom Oberbegriff in Verbindung mit dem kennzeichnenden Teil des Patentanspruches 1 gelöst. Vorteilhafte Weiterbildungen sind Bestandteil von Unteransprüchen.

Nach der Lehre der Erfindung wird ein Rohr aus Stahl mit einer auf das Rohr aufgebrachten Ummantelung aus spannungsrissempfindlichem Kunststoff bereitgestellt, welches dadurch gekennzeichnet ist, dass zwischen der Ummantelung und dem Rohr eine Pufferschicht aus elastischem Kunststoff angeordnet ist, wobei die Pufferschicht mit Gas enthaltenden Poren durchsetzt ist.

In einer ersten Ausgestaltung der Erfindung besteht die Ummantelung aus spannungsrissempfindlichem polarem und die Pufferschicht aus elastischem, nichtpolarem Kunststoff.

Der polare Kunststoff kann z.B. Polymethylmethacrylat (PMMA), Polycarbonat (PC) oder Polystyrol (PS) und der nichtpolare Kunststoff z.B. Polyethylen (PE), Polypropylen (PP) oder Polyurethan (PUR) sein.

Der besondere Clou der Erfindung besteht darin, dass die elastische Pufferschicht mit Gas enthaltenden Poren durchsetzt ist, wodurch ein unterschiedliches Dehn- bzw. Schrumpfverhalten von Stahlrohr und Ummantelung ermöglicht wird, und die entstehenden thermischen Spannungen zwischen Ummantelung und Stahlrohr durch die elastische Pufferschicht vollständig oder nahezu vollständig abgebaut werden und so die harte Ummantelung vor Rissen schützt.

Als preiswerteste Lösung wird im Normalfall Umgebungsluft zum Aufschäumen des Kunststoffs der Pufferschicht verwendet, es kann aber auch jedes andere Gas wie z.B. Stickstoff oder Edelgas zum Aufschäumen verwendet werden.

Vorteilhaft wirkt sich bei der erfindungsgemäßen Lösung die Tatsache aus, dass polare und nichtpolare Kunststoffe keine Haftung untereinander eingehen. Beim Aufbringen der Ummantelung auf die Pufferschicht des Rohres z.B. mittels Extrusion spielt es dann keine Rolle, welche Temperatur die Pufferschicht vor dem Aufbringen der Ummantelung aufweist, da eine stoffschlüssige Verbindung ausgeschlossen ist.

Als vorteilhaft haben sich Porenanteile von mindestens 1% bis etwa 70% bewährt. Hierbei sollten mit Zunahme des Rohrdurchmessers, der Wanddicke und der Dicke der Ummantelung entsprechend höhere Porenanteile verwendet werden, um das Pufferungsvermögen zu erhöhen. In der Praxis haben sich Porenanteile von 10% bis 60% bzw. im Regelfall 20% bis 30% bewährt.

Um eine ausreichende Wirkung der Pufferschicht zu erhalten, sollte diese abhängig von der Dicke der Ummantelung eine Mindestdicke nicht unterschreiten. In der Praxis haben sich z.B. bei einer 3 mm dicken Ummantelung, Pufferschichtdicken von 6 mm bewährt. Günstig ist es, wenn die Pufferschicht je nach Porenvolumen etwa doppelt so dick ist, wie die Ummantelungsdicke.

Übliche Dicken der Pufferschicht und der Ummantelung bewegen sich jeweils etwa zwischen 2 und 10 mm.

Der große Vorteil der Erfindung besteht außerdem darin, dass bei Verwendung von unterschiedlich polaren Kunststoffen für Ummantelung und Pufferschicht einerseits ein stoffschlüssiger Haftverbund zwischen den Schichten vermieden wird, der sich nachteilig auf das Dehnvermögen der Ummantelung auswirken würde, andererseits kann durch geeignete Wahl der Pufferschichtdicke und des Porenanteils in weiten Bereichen auf die Einsatzbedingungen des Rohres bzw. der Rohrleitung reagiert werden.

Anhand einer **Figur** wird die Erfindung nachfolgend näher erläutert.

Das erfindungsgemäße kunststoffummantelte Rohr besteht aus einem Rohr 1 aus Stahl, welches in diesem Beispiel mit einer spannungsrissempfindlichen Ummantelung 2 aus polarem PMMA versehen ist und eine Dicke von etwa 3 mm aufweist (Zeichnung ist nicht maßstabsgerecht).

Zwischen Stahl 1 und Ummantelung 2 ist erfindungsgemäß eine Pufferschicht 3 aus einem elastischen nichtpolaren Kunststoff, in diesem Fall aus Polyethylen (PE), angeordnet, die eine Dicke aufweist, die etwa doppelt so groß ist, wie die Dicke der Ummantelung, also etwa 6 mm, um ein ausreichendes Pufferungsvermögen zu gewährleisten.

Die Ummantelung 2 und die Pufferschicht 3 haben durch ihre unterschiedliche Polarität keinen Haftverbund untereinander, so dass eine Relativverschiebung der Kunststoffschichten bei sich aufbauenden Umfangsspannungen unter Temperatureinfluss ermöglicht wird und so die Spannungen wieder reduziert werden.

Um ein ausreichendes Pufferungsvermögen zu realisieren, weist die Pufferschicht 3 Gaseinschlüsse als Poren 4 mit einem Anteil von ca. 20% auf, die als poröses Material auf das Rohr 1 z.B. durch Extrusion aufgetragen wurde.

**Bezugszeichenliste**

| **Nr.** | **Bezeichnung** |
|---|---|
| 1 | Rohr |
| 2 | Kunststoffummantelung |
| 3 | Pufferschicht |
| 4 | Poren |

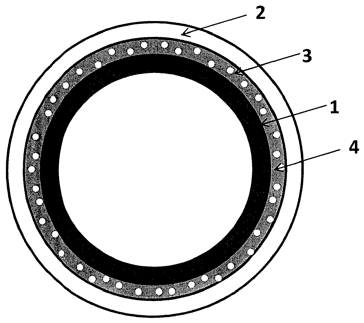

## Patentansprüche

1. Kunststoffummanteltes Rohr aus Stahl mit einer auf das Rohr (1) aufgebrachten Ummantelung (2) aus spannungsrissempfindlichem Kunststoff,
**dadurch gekennzeichnet,**
- **dass** zwischen der Ummantelung (2) und dem Rohr (1) eine Pufferschicht (3) aus elastischem Kunststoff angeordnet ist und die Pufferschicht (3) mit Gas enthaltenden Poren (4) durchsetzt ist,
- **dass** die Ummantelung (2) aus polarem und die Pufferschicht (3) aus nichtpolarem Kunststoff besteht, wobei
die Ummantelung (2) aus Polymethylmethacrylat (PMMA), Polycarbonat (PC) oder Polystyrol (PS) und die Pufferschicht (3) aus Polyethylen (PE), Polypropylen (PP) oder Polyurethan (PUR) besteht und
**dass** die Pufferschicht (3) und das Rohr (1) einen Haftverbund aufweisen und die Pufferschicht (3) und die Ummantelung (2) haftungslos aufeinanderliegen.

2. Kunststoffummanteltes Rohr nach Anspruch 1,
**dadurch gekennzeichnet,**
**dass** die Pufferschicht (3) ein mit Poren (4) durchsetzter, aufgeschäumter Kunststoff ist.

3. Kunststoffummanteltes Rohr nach Anspruch 2,
**dadurch gekennzeichnet,**
**dass** der Anteil an Poren (4) der Pufferschicht (3) 1% bis 70% beträgt.

4. Kunststoffummanteltes Rohr nach Anspruch 3,
**dadurch gekennzeichnet,**
**dass** der Anteil an Poren (4) der Pufferschicht (3) 10% bis 60% beträgt

5. Kunststoffummanteltes Rohr nach Anspruch 4,
**dadurch gekennzeichnet,**
**dass** der Anteil an Poren (4) der Pufferschicht (3) 20% bis 30% beträgt.

6. Kunststoffummanteltes Rohr nach einem der Ansprüche 1 bis 5,
**dadurch gekennzeichnet,**
**dass** die Pufferschicht (3) eine Dicke von 2 bis 10 mm aufweist.

7. Kunststoffummanteltes Rohr nach einem der Ansprüche 1 bis 6,
**dadurch gekennzeichnet,**
**dass** die Ummantelung (2) eine Dicke von 2 bis 10 mm aufweist.

## Claims

1. Plastic material-covered pipe made of steel having a covering (2) applied on the pipe (1) and made of a stress crack-sensitive plastic material,
**characterised in that**
- between the covering (2) and the pipe (1), a buffer layer (3) made of an elastic plastic material is disposed and the buffer layer (3) is interspersed with gas-containing pores (4),
- the covering (2) consists of polar plastic material and the buffer layer (3) of non-polar plastic material,
- the covering (2) consisting of polymethylmethacrylate (PMMA), polycarbonate (PC) or polystyrene (PS) and the buffer layer (3) of polyethylene (PE), polypropylene (PP) or polyurethane (PUR) and
- the buffer layer (3) and the pipe (1) have an adhesive bond and the buffer layer (3) and the covering (2) are situated one above the other without an adhesive bond.

2. Plastic material-covered pipe according to claim 1,
**characterised in that**
the buffer layer (3) is a foamed plastic material interspersed with pores (4).

3. Plastic material-covered pipe according to claim 2,
**characterised in that**
the proportion of pores (4) of the buffer layer (3) is 1% to 70%.

4. Plastic material-covered pipe according to claim 3,
**characterised in that**
the proportion of pores (4) of the buffer layer (3) is 10% to 60%.

5. Plastic material-covered pipe according to claim 4,
**characterised in that**
the proportion of pores (4) of the buffer layer (3) is 20% to 30%.

6. Plastic material-covered pipe according to one of the claims 1 to 5,
**characterised in that**
the buffer layer (3) has a thickness of 2 to 10 mm.

7. Plastic material-covered pipe according to one of the claims 1 to 6,
**characterised in that**
the covering (2) has a thickness of 2 to 10 mm.

## Revendications

1. Tube en acier à gainage plastique, comportant un gainage (2) appliqué sur le tube (1), en un plastique sensible à la fissuration sous contrainte, **caractérisé en ce que**
- entre le gainage (2) et le tube (1) est disposée une couche tampon (3) en un plastique élastique, et la couche tampon (3) est sillonnée de pores (4) contenant un gaz,
- le gainage (2) est constitué d'un plastique polaire et la couche tampon (3) est constituée d'un plastique non polaire,
le gainage (2) étant constitué de polyméthacrylate de méthyle (PMMA), de polycarbonate (PC) ou de polystyrène (PS) et la couche tampon (3) étant constituée de polyéthylène (PE), de polypropylène (PP) ou de polyuréthanne (PUR) et
**en ce que** la couche tampon (3) et le tube (1) présentent un assemblage par adhésion, et la couche tampon (3) et le gainage (2) sont superposés sans adhérence.

2. Tube à gainage plastique selon la revendication 1, **caractérisé en ce que** la couche tampon (3) est un plastique expansé, sillonné de pores (4).

3. Tube à gainage plastique selon la revendication 2, **caractérisé en ce que** la proportion des pores (4) de la couche tampon (3) est de 1 % à 70 %.

4. Tube à gainage plastique selon la revendication 3, **caractérisé en ce que** la proportion des pores (4) de la couche tampon (3) est de 10 à 60 %.

5. Tube à gainage plastique selon la revendication 4, **caractérisé en ce que** la proportion des pores (4) de la couche tampon (3) est de 20 % à 30 %.

6. Tube à gainage plastique selon l'une des revendications 1 à 5, **caractérisé en ce que** la couche tampon (3) présente une épaisseur de 2 à 10 mm.

7. Tube à gainage plastique selon l'une des revendications 1 à 6, **caractérisé en ce que** le gainage (2) présente une épaisseur de 2 à 10 mm.
